# EUROPEAN PATENT APPLICATION

(11) **EP 3 029 819 A1**
(43) Date of publication of application: **08.06.2016**
(21) Application number: 15197303.9
(22) Date of filing: 01.12.2015
(51) Int. Cl.: H02K 41/03, H02K 16/00

(54) **ELECTROMECHANICAL LINEAR ACTUATOR**

(30) Priority: 01.12.2014 US 201414556984
(71) Applicant: Hamilton Sundstrand Corporation, Charlotte, NC 28217 (US)
(72) Inventor: MASTROCOLA, Naison E., Goshen, CT 06756 (US); AVRITCH, Steven A., Bristol, CT 06010 (US)
(74) Representative: Leckey, David Herbert

(57) **Abstract**

A linear actuator (10) includes an actuator housing (12). The actuator housing (12) includes a plurality of motors (Ma,Mb) providing linear movement along a motor drive axis wherein the motor drive axes are parallel, and wherein the motors (Ma,Mb) are within the housing (12). Each motor (Ma,Mb) includes a stator (16a,16b) for applying an electromagnetic force and a rod (14a,14b) movable within the stator (16a,16b). The electromagnetic force from the stator (16a,16b) drives the rod (14a,14b) to extend from and retract into the stator (16a,16b) along the motor drive axis of that motor (Ma,Mb).

## Description

### BACKGROUND

The present disclosure relates generally to actuators, and more specifically to electromechanical linear actuators.

Linear actuators are motor assemblies that create movement along a single axis or straight line. To accomplish this, the actuators contain motors that produce a force to drive a member along a single axis. Many motors have been used to create linear motions. For example, an electric direct current motor may be used to rotate a threaded rod inside of a threaded channel, where the rod will extend linearly as it is rotated by the motor. Another example is to pump hydraulic fluid into and out of a chamber, resulting in linear extension of a rod due to hydraulic pressures. Another example is to use an electromagnetic stator to drive a permanent magnetic rod to extend from the stator.

Linear actuators are applied to many applications from industrial machines, to amusement park rides, to HVAC valves, to aircraft flight control mechanisms. In certain applications, such as in aircraft flight control, redundancy may be required along with component safety factors of 1x10⁻⁹, and high levels of accuracy. In applications having these requirements, a solution is necessary that reduces error and increases redundancy while minimizing costs normally associated with meeting these criteria.

### SUMMARY

In one embodiment, a linear actuator includes an actuator housing. The actuator housing includes a plurality of motors providing linear movement along a motor drive axis wherein the motor drive axes are parallel, and wherein the motors are within the housing. Each motor includes a stator for applying an electromagnetic force and a rod movable within the stator. The electromagnetic force from the stator drives the rod to extend from and retract into the stator along the motor drive axis of that motor.

In another embodiment, a method (for driving a linear actuator having a plurality of motors arranged within a common housing so that motor drive axes of the motors are parallel) includes receiving a command signal for each motor. The method also includes using a plurality of controllers, where each controller is associated with a different one of the motors, to produce a drive signal to be sent to the associated motor of each controller based on the command signal for that motor. The method also includes sending the drive signal to a stator of each motor from its associated controller. The method further includes driving a rod of each motor along one of the motor drive axis of that motor based on electromagnetic force produced by the stator in response to the drive signal.

### BRIEF DESCRIPTION OF THE DRAWINGS

FIGS. 1A and 1B are side and end perspective views of a linear actuator.
FIG. 2A and 2B are cross-sectional views along 2A-2A and 2B-2B, respectively, of the linear actuator of FIG. 1.
FIG. 3 is a block diagram of a control system of the linear actuator of FIGS. 1A, IB, and 2.
FIG. 4 is a block diagram of another embodiment of a control system of the linear actuator of FIGS. 1A, 1B, and 2.

### DETAILED DESCRIPTION

According to the techniques described in this disclosure, a linear actuator may include multiple electromagnetic stators. The stators may work to provide linear motion to their forcer rods which together drive a common surface. To provide efficient operation and to prevent jamming or binding of the rods, the actuator can include linear variable differential transformers (LVDTs), which provide position feedback of the rods. The actuator can also include, between the actuator housing and the stator, force sensing elements, such as multi-directional load cells, to determine the force exerted on the individual rods by the stators. This force and position measurements may be used to discover inconsistencies and malfunctions in operation of the individual stator assemblies, upon detection of which, corrections can be made to the individual stators to drive the rods in unison effectively and efficiently.

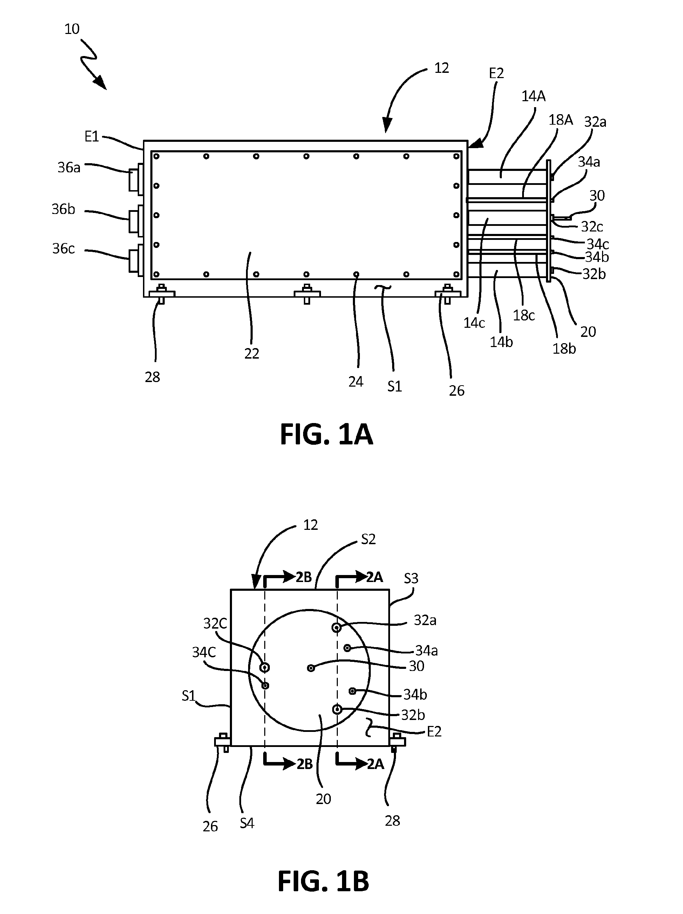

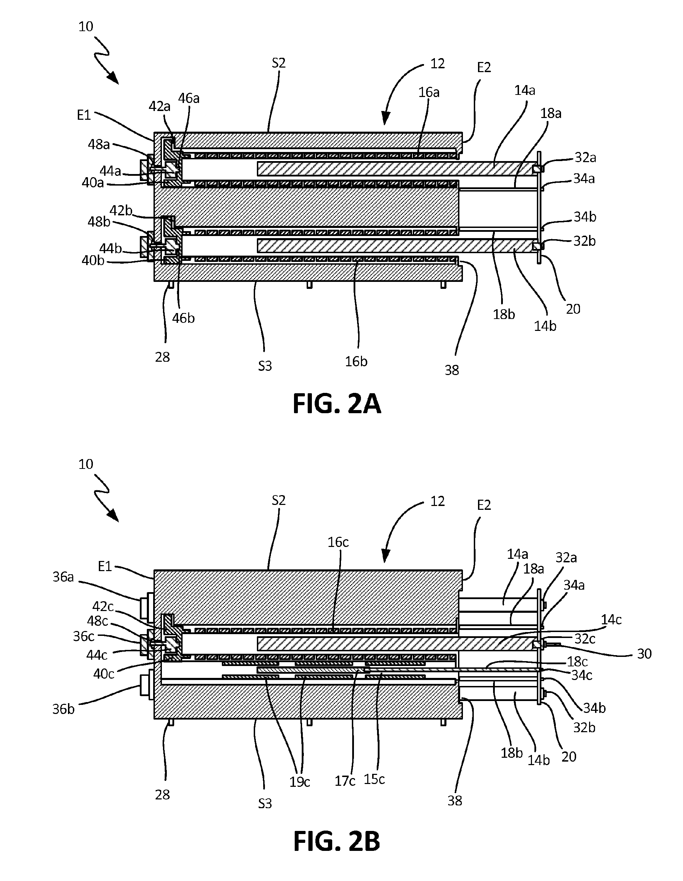

FIGS. 1A and 1B are perspective views of linear actuator 10 are discussed concurrently. Linear actuator 10 includes housing 12. Within and attached to housing 12 are rods 14a-14c, stators 16a-16c (shown in FIGS. 2A and 2B), armatures 18a-18c, plate 20, access plates 22, access fasteners 24, housing mounts 26, mount fasteners 28, guide rod 30, rod fasteners 32a-32c, armature fasteners 34a-34c, and electronics connectors 36a-36c. Also displayed are ends E1 and E2, and sides S1, S2, S3, and S4 of linear actuator 10.

Housing 12 contains or attaches to the components of actuator 10. Within housing 12 are rods 14a-14c, which extend from housing 12 at end E2 and make contact with the inside of plate 20, which is shown as being of a round shape (but may be of any shape), at the proximate end of rods 14a-14c. The other ends of rods 14a-14c terminate within stators 16a-16b and are not connected to anything. Rods 14a-14c are attached and secured to plate 20 by rod fasteners 32a-32c, which can be a bolt, screw, or any other permanent or non-permanent fastening device. Armatures 18a-18c also reside within housing 12. Armatures 18a-18c also extend from housing 12 at end E2, make contact with the inside of plate 20, and are secured to plate 20 by armature fasteners 34a-34c. Connected to the outside of plate 20 is guide rod 30, which is affixed to access plate 22 and extends axially away from side S3.

Attached to housing 12 are access plates 22. Access plates 22 attach to side S1 of housing 12 and are secured to side S1 of housing 12 by access fasteners 24. Access plates 22 can be attached to housing 12 by access fasteners 24 at any of Sides S1 through S4. Also attached to housing 12 are housing mounts 26. Housing mounts 26 are shown attached to sides S1 and S3, but can attach to any of the sides of housing 12, depending on the desired mounting configuration. Passing through housing mounts 26 are mount fasteners 28, which may be bolts or other fastening devices. Mount fasteners 28 connect housing mounts 26 to the desired mounting surface (not shown), such as a set of brackets configured to receive housing mounts 26 and mount fasteners 28. Located at end E1 of housing 12 are electronics connectors 36a-36c which are physically connected to housing 12 and electrically connect to the internal electrical components of actuator 10.

Rods 14a-14C move into and extend from actuator housing 12, which causes plate 20 to extend away from and draw towards end E2. When fully recessed into housing 12, rods 14a-14C will draw plate 20 into end E2 so that the outside of plate 20 is flush with E2. The movement of plate 20 caused by rods 14a-14C results in the movement of armature 18 which, like rods 14a-14C, extend from and retract into actuator housing 12. Armatures 18a-18c are extendable rods of linear variable differential transformers LVDTa-LVDTc, which reside within housing 12, but are not fully shown in FIGS. 1A or 1B.

Removal or unfastening of cover fasteners 24 allows for access plate 22 to be removed from side S1 of housing 12. Upon removal of access plates 22, the components residing in housing 12 are readily accessible from outside of housing 12. Specifically, removal of access plates 22 can allow for access to the electrical components (such as controllers 50a-50c shown in later FIGS.) within linear actuator 10.

FIG. 2A shows the interior of linear actuator 10 along section 2A-2A of FIG. 1B. Linear actuator 10 includes housing 12. Within and attached to housing 12 are rods 14a-14b, stators 16a-16b, armatures 18a-18b, plate 20, mount fasteners 28, guide rod 30, rod fasteners 32a-32b, armature fasteners 34a-34b, and electronics connectors 36. Also included in linear actuator 10 are plate recess 38, stator retainers 40a-40b, retainer cavities 42a-42b, load cells 44a-44b, stator mounts 46a-46b, and load cell mounts 48a-48b. Also displayed are ends E1 and E2, and sides S1 and S3 of linear actuator 10. Also within housing 12, but not displayed are rod 14c, stator 16c, armature 18c, rod fastener 32c, armature fastener 34c, electronics connector 36c, stator retainer 40c, retainer cavity 42c, load cell 44c, stator mount 46c, and load cell mount 48c. These elements are shown in FIG. 2B.

The connections of the components in FIG. 2A are consistent with those shown in FIGS. 1A and 1B; however, additional detail is provided in FIG. 2A and 2B. Stators 16a-16b of linear actuator 10 are hollow cylindrical electromagnetic motors, but may be of any other geometry allowing stators 16a-16b to operate, that are mounted within housing 12. Rods 14a-14b are movable within stators 16a-16b. Stators 16a-16b terminate near end E2 of housing 12, but stop short of end E2. This creates plate recess 38, into which plate 20 may recede.

Near end E1 are stator retainers 40a-40b of stators 16a-16b. Stator retainers 40a-40b have a profile configured to fit within retainer cavities 42a-42b of housing 12. Stator retainers 40a-40b are attached and connected to load cells 44a-44b at stator mounts 46a-46b. Stator mounts 46a-46b can be comprised of any fastening device that allow for stator mounts 46a-46b to secure load cells 44a-44b to stators 16a-16b. On the side of load cells 44a-44b nearest to side E1 are load cell mounts 48a-48b, which are configured to mount and secure load cells 44a-44b to housing 12 at end E1. Covering load cell mounts 48a-48b are electronics connectors 36a-36b, which also connect the electronic components shown, such as stators 16a-16c, linear variable differential transformers LVDTa-LVDTc (shown in later FIGS.), load cells 44a-44c, all of the electronics not shown (such as a controller, wiring, a drive circuit, and other electronic components required to operate linear actuator 10) to flight control computers. Electronics connectors 36a-36b also distribute power to the components requiring electrical power. Electronics connectors 36a-36b may by MIL-DTL-38999 style connectors, but may be any style of connector allowing for electrical communication and power to be received and distributed.

Discussed below is the functionality of stator 16a and rod 14a and the components of linear actuator 10 with which stator 16a and rod 14a interact. Stators 16b-16c and rods 14b-14c operate and interact with other components of linear actuator 10 consistent with the description of stator 16a and rod 14a below.

Stator 16a, which can be a coil of electrically conductive wire (such as copper), receives electrical power and creates electromagnetic force, which drives rod 14a, that is made of a magnetic material, to extend out of housing 12, or to retract into housing 12. The result of the movement causes plate 20 to extend from or draw near end E2 of linear actuator 10. The movement of plate 20 will typically drive an external component to move. However, in place of plate 20, rods 14a-14c could be mounted directly to the surface or object being moved by plate 20.

Because armature 18a is also attached to plate 20, armature 18a extends and retracts in unison with rod 14a. This results in the creation of a position feedback signal by each linear variable differential transformers LVDTa-LVDTc based on the position of armature 18a relative to housing 12.

The force applied to rod 14a by stator 16a creates a reaction force in stators 16a, which is applied to load cell 44a through stator retainer 40a, and is detected by load cell 44a. Load cell 44a creates a force feedback signal based on the force detected by load cell 44a. Load cell 44a is able to receive and sense the forces applied by stator 16a, because load cell 44a is mounted to housing 12 as well as stator retainer 40a. This mounting configuration prevents load cell 44a from moving relative to stator 16a. When a compressive reaction force is transferred from stators 16a to load cell 44a, load cell 44a is compressed between end E1 of housing 12 and stator retainer 40a of stator 16a. Similarly, a bidirectional load cell 44a may also detect a tensile force when the reaction force applied by stator 16a pulls load cells 44a (via stator mount 46) away from end E1 and towards end E2. In this case, load cell 44a is able to detect the tensile force, because it is fastened by load cell mount 48a preventing load cell 44a from moving relative to stator 16a.

Stator mount 46a is the primary attachment of load cell 44a to stator retainer 40a securing stator 16a to housing 12. Stator retainer 40a, in conjunction with retainer cavity 42a, operates as a secondary retention of stator 16a in case the attachment at stator mount 46a fails. Stator retainer 40a has a profile that fits securely within retainer cavity 42a, which thereby resists movement of stator 16a. To accomplish this, the surfaces of stator retainer 40a will contact the portion of housing 12 that forms retainer cavity 42a. This contact prevents stator 16a from moving when a reaction force is transferred to stator 16a.

FIG. 2B shows the interior of linear actuator 10 along section 2B-2B of FIG. 1B. Linear actuator 10 includes housing 12. Within and attached to housing 12 are rod 14c, stator 16c, core 17c, armature 18c, coils 19c, plate 20, mount fastener 28, guide rod 30, rod fastener 32c, armature fasteners 34c, and electronics connector 36c. Also included in linear actuator 10 are plate recess 38, stator retainers 40c, retainer cavity 42c, load cell 44c, stator mount 46c, and load cell mount 48c. Also displayed are ends E1 and E2, and sides S1 and S3 of linear actuator 10.

The connections of the components in FIG. 2B are consistent with those shown in FIGS. 1A and 1B; however, additional detail is provided in FIG. 2B. Stator 16c of linear actuator 10 is a hollow cylindrical electromagnetic motor. Rod 14c is movable within stator 16c.

Near end E1 is stator retainer 40c of stator 16c. Stator retainer 40c has a profile configured to fit within retainer cavity 42c of housing 12. Stator retainer 40c is attached and connected to load cell 44c at stator mount 46c. On the side of load cell 44c nearest to end E1 is load cell mount 48c, which is configured to mount and secure load cell 44c to housing 12 at end E1. Covering load cell mounts 48c is electronics connector 36c, which also connect to electronic components as described above.

Residing within housing 12 is core 17c, which connects to armature 18c. Armature 18c may connect to, pass through, or terminate in core 17c. Core 17c is a permanent magnet that is surrounded by, but not contacted by, coils 19c, which are integrated into housing 12. However, coils 19c may not be integral to housing 12, and may instead be integrated into a linear variable differential transformer LVDTc that resides within housing 12. Regardless, coils 19c are fixed within housing 12, and are therefore not free to move relative to core 17c. Three of coils 19c are shown; however, more or less of coils 19c may be used. Coils 19c are windings or coils of wire, typically copper.

Discussed below is the functionality of core 17c, armature 18c, coils 19c, and the components of linear actuator 10 with which these components interact. Cores 17a-17b, armatures 18a-18b, and coils 19a-19b operate and interact with components of linear actuator 10 consistent with the description below.

Stator 16c drives rod 14c as described above, which moves plate 20. Because armature 18c is also attached to plate 20, armature 18c extends and retracts in unison with rod 14c. Because armature 18c is connected to core 17c, core 17c is moved by armature 18c within housing 12. Coils 19c, which are positionally fixed relative to core 17c, can produce a voltage signal based on movement of core 17c. This is accomplished by one of coils 19c producing a voltage that passes through one of coils 19c, which, through core 17c, causes a voltage to be induced in the other of coils 19c. The induced voltage signals change as core 17c moves relative to coils 19c, resulting in the creation of a position feedback signal by linear variable differential transformers LVDTc based on the position of armature 18c relative to housing 12.

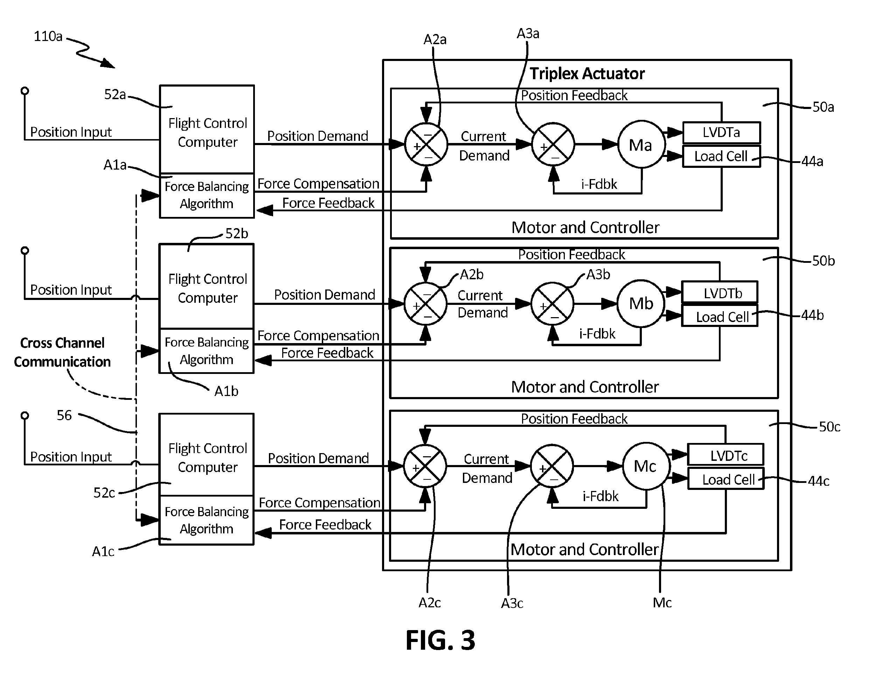

FIG. 3 is a block diagram of control system 110a of linear actuator 10 of FIGS. 1, 2A and 2B. Control system 110a includes motors Ma-Mc (which include rods 14a-14c and stators 16a-16c). Control system 110a also includes load cells 44a-44c, controllers 50a-50c, flight control computers 52a-52c, linear variable differential transformers LVDTa-LVDTc, and cross-channel communication network 56. Also illustrated in FIG. 3 are force balancing algorithms A1a-A1c, position algorithms A2a-A2c, and current algorithms A3a-A3c.

Flight controllers 52a-52c receive position input signals from an external source, such as pilot demand inputs (such as sticks, knobs, or buttons) or airframe sensors (such as speed or location sensors). Flight control computers 52a-52c communicate their received input to all of the other flight control computers through cross channel communication network 56. Each flight control computer 52a-52c performs the same position demand algorithm, an algorithm which decides how much to move rods 14a-14c. The result of this algorithm is a position demand signal to be sent to controllers 50a-50c. Flight control computers 52a-52c compare algorithm outputs and decide, based on a voting system, what position demand signal will be sent by each control computer. Thereafter, flight control computers 52a-52c send position demand signals to controllers 50a-50c. For example flight control computer 52a sends a position demand signal to controller 50a.

Flight control computers 52a-52c also receive force feedback signals from load cells 44a-44c, respectively, and communicate their received force feedback signals to all of the other flight control computers through cross channel communication network 56. Flight control computers 52a-52c each perform force balancing algorithm A1a-A1c to determine the force compensation signal to be sent to controllers 50a-50c. The force balancing algorithm considers how much force is to be applied to rods 14a-14c, how much force was to be applied to rods 14a-14c and how much force was actually applied. The algorithm then determines a compensation value (contained in a compensation signal) that should be applied to the new position demand signal. Then, flight control computers 52a-52c compare algorithm outputs and decide, based on a voting system, what force compensation signal will be sent to controllers 50a-50c and then send the force compensation signals to controllers 50a-50c.

Discussed below is the connectivity and functionality of controller 50a; however, controllers 50b-50c operate in accordance with the description and explanation of controller 50a.

The position demand signal and force compensation signal sent by flight control computer 52a are received by controller 50a. Also received by controller 50a is a position feedback signal provided by linear variable differential transformer LVDTa. In position algorithm A2a, controller 50a considers the position of the rod to be moved (position demand signal), the position the rod is currently in or has moved (the position feedback signal), and the adjustment to be made on this position based on the force compensation value (force compensation signal). Controller 50a then performs position algorithm A2a based on the position demand signal, the position feedback signal, and the force compensation signal, which results in a current demand signal that is passed internally in controller 50a. The current demand signal carries information packets containing how much current should be applied to motor Ma to achieve the position of rod 14a determined by position algorithm A2a.

Controller 50a also receives a current feedback signal from motor Ma. Controller 50a uses the current demand signal from position algorithm A2a and the current feedback signal from motor 58a as inputs to current algorithm A3a. Current algorithm A3a considers the amount of current that is desired to be supplied to motor Ma (currernt demand signal), and the amount of current that is being or was supplied to motor Ma. The result of current algorithm A3a is a drive signal, which is sent to motor Ma. The drive signal commands motor Ma to move rod 14a in a particular direction with a specified amount of power. The result is movement of rod 14a relative to stator 16a and housing 12.

As described above, the movement of rod 14a results in the movement of plate 20 and therefore movement of armature 18a. The movement of armature 18a is detected by linear variable differential transformer LVDTa. Based on this movement of armature 18a, linear variable differential transformer LVDTa creates position feedback signal to be sent to position algorithm A2a within controller 50a, thus creating a position feedback loop. Similarly, the force applied on rod 14a created by stator 16a, as described above, results in a force sensed by load cell 44a. Based on the sensed force, load cell 44a creates a force feedback signal, which is sent to force balancing algorithm A1a within controller 50a, creating a force feedback loop. Another feedback loop is created by a current transducer, or other current sensing device located on motor Mc, which senses the amount of current sent to motor Mc. This sensor creates a current feedback signal based on the sensed current, which is sent to current algorithm A3a within controller 50a, creating a current feedback loop.

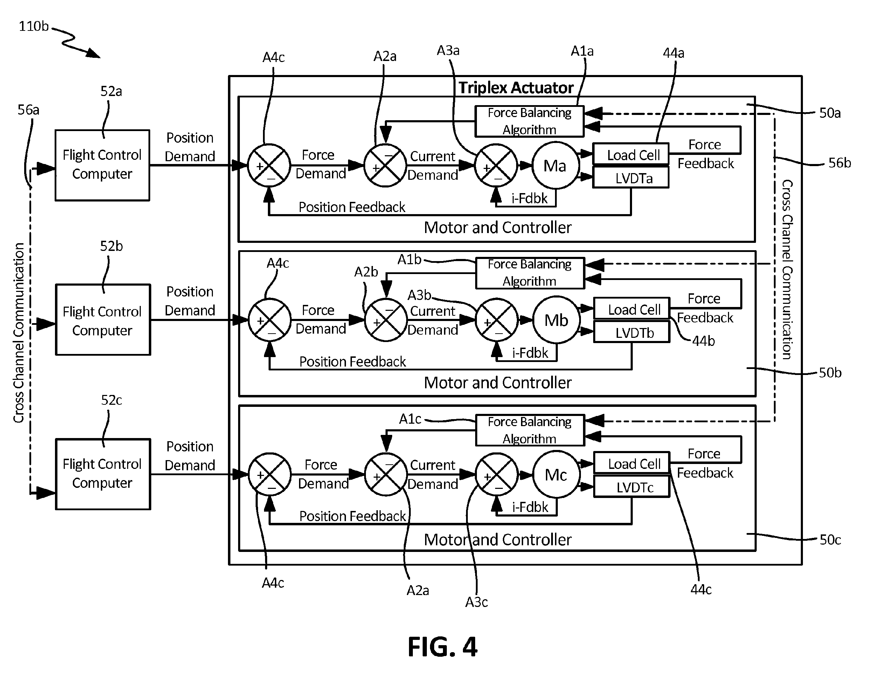

FIG. 4 is a block diagram of control system 110b of linear actuator 10 of FIGS. 1 , 2A, and 2B. Control system 110b includes motors Ma-Mc, which include rods 14a-14c and stators 16a-16c. Control system 110a also includes load cells 44a-44c, controllers 50a-50c, flight control computers 52a-52c, linear variable differential transformers LVDTa-LVDTc, and cross-channel communication networks 56a and 56b. Also illustrated in FIG. 4 are force-balancing algorithms A1a-A1c, position algorithms A2a-A2c, current algorithms A3a-A3c, and position algorithms A4a-A4c.

Flight controllers 52a-52c receive position input signals from an external source, such as pilot demand inputs (such as sticks, knobs, or buttons) or airframe sensors (such as speed or location sensors). Flight control computers 52a-52c communicate their received input to all of the other flight control somputers through cross channel communication network 56a. Each flight control computer 52a-52c performs the same position demand algorithm, an algorithm which decides how much to move rods 14a-14c. The result of this algorithm is a position demand signal to be sent to controllers 50a-50c. Flight control computers 52a-52c compare algorithm outputs and decide, based on a voting system, what position demand signal will be sent by each control computer. Thereafter, flight control computers 52a-52c send position demand signals to controllers 50a-50c. For example, flight control computer 52a sends a position demand signal to controller 50a.

Discussed below is the connectivity and functionality of controller 50a; however, controllers 50b-50c operate in accordance with the description and explanation of controller 50a.

The position demand signal sent by flight control computer 52a is received by controller 50a. Also received by controller 50a is a position feedback signal provided by linear variable differential transformer LVDTa. In position algorithm A4a, controller 50a considers the position of the rod to be moved (position demand signal) and the position the rod is currently in or has moved (the position feedback signal). Controller 50a then performs position algorithm A4a based on the position demand signal, and the position feedback signal, which results in a force demand signal that is passed internally in controller 50a to force demand algorithm A2a. The force demand signal carries information packets containing how much force should be applied to rod 14a of motor Ma based on the position determined by position algorithm A4a.

Controller 50a also receives a force feedback signal from load cell 44a and communicates the received force feedback signals to controllers 50b-50c through cross channel communication network 56b. Controllers 52a-52c each perform force balancing algorithms A1a-A1c to determine the force compensation signal to be sent to controllers 50a-50c. The force balancing algorithm considers how much force is to be applied to rods 14a-14c, how much force was to be applied to rods 14a-14c and how much force was actually applied. The algorithm then determines a compensation value (contained in a compensation signal) that should be applied to the new position demand signal. Then, controllers 50a-50c compare algorithm outputs and decide, based on a voting system, what force compensation signal will be sent used by controllers 50a-50c and then send the force compensation signals internally.

The force compensation signal is sent within controller 50a to force demand algorithm A2a. In force demand algorithm A2a, controller 50a considers the force to be applied to rod 14a (force demand signal), and the adjustment to be made on this force based on the force compensation value (force compensation signal). Controller 50a then performs position algorithm A2a based on the force demand signal and the force compensation signal, which results in a current demand signal that is passed internally in controller 50a. The current demand signal carries information packets containing how much current should be applied to motor Ma, based on the position determined by demand algorithm A2a.

Controller 50a also receives a current feedback signal from motor Ma. Controller 50a uses the current demand signal from position algorithm A2a and the current feedback signal from motor Ma as inputs to current algorithm A3a. Current algorithm A3a considers the amount of current that is desired to be supplied to motor Ma (current demand signal), and the amount of current that is being or was supplied to motor Ma. The result of current algorithm A3a is a drive signal, which is sent to motor Ma. The drive signal commands motor Ma to move rod 14a in a particular direction with a specified amount of power. The result is movement of rod 14a relative to stator 16a and housing 12. As in control system 110a described in FIG. 3, control system 110b creates a position feedback loop, a force feedback loop, and a current feedback loop.

Though the systems described herein contain three motors, it is to be understood that the techniques of this disclosure would apply to a linear actuator system containing any number of motors. For example, a linear actuator containing two or four motors could employ the techniques of this disclosure.

A major benefit of linear actuator 10, in any of the embodiments discussed, is the redundancy provided through the use of multiple motors. In aviation, actuators must be very accurate. In addition to the accuracy requirements, some applications of linear actuators require high safety factors, such as a safety factor of 1x10⁻⁹. One of the few ways to achieve a safety factor of this magnitude is to make use of redundant components, so that if there is a failure, another component having identical specifications can perform the same function as the failed component. It is common in aviation, where redundancy and accuracy are needed, to use multiple actuators to actuate a surface or object.

Accuracy requirements are much more difficult to comply with when multiple motors are used, because the multiple motors will frequently contain inconsistencies from manufacturing, resulting in differences in performance. The inconsistencies often will not matter when operating a single motor, because the inconsistencies may be easily accounted for. However, when multiple motors are used, the inconsistencies cause unevenly distributed forces and differences in actuation distance. These problems can lead to component failure and operational failure. The industry's solution has been to use multiple actuators, physically separated from one another, to drive a common surface or object. Then, the inconsistencies in force and actuation distance can be spread out over the maximum dimensions of the object being driven. For example, in the case of a wing flap, three actuators may be spread out over the span of the entire flap, providing the accuracy and redundancy required to actuate a flap, while the flap may offer the flexibility required to compensate for motor inconsistencies in load and distance of the actuators. While this solution is effective, it is expensive, because three separate actuators having their own attachment points must be individually connected and wired. This solution is also inefficient, because multiple actuators having their own housings, mounting and wiring will weigh more than a single, multi-motor actuator.

One benefit of the present invention is the ability to use redundant motors in a single housing. The present invention overcomes the issues above in many ways. First, non-binding electromagnetic linear motors, for example motor Ma, are used. Motor Ma includes an electromagnetic stator 16a and a permanent magnet rod 14a that is forcibly driven by stator 16a. There is minimal contact between stator 16a and the rod 14a, drastically reducing binding and jamming occurrences that other types of linear actuators may experience.

Second, linear variable differential transformers LVDTa-LVDTc are paired with motors Ma-Mc to determine the position or travel of rods 14a-14c relative to stators 16a-16c and housing 12. This allows for control system 110a or 110b to detect any differences in the driven distance of rods 14a-14c, perform a calculation, and provide an updated signal to motors Ma-Mc to account for any positional differences between rods 14a-14c operating in unison. This allows for rods 14a-14c to drive a common surface or object at a high level of accuracy.

Third, bi-directional load cells 44a-44c are used to detect the forces exerted on rods 14a-14c. This provides a control system, flight control computer 52a for example, with knowledge of how much force is being applied to rods 14a-14c, allowing flight control computer to determine if rods 14a-14c are working against each other, or fighting, to maintain position. That is, stator 16a may be forcing rod 14a to extend, while stator 16b is forcing rod 14b to retract. The result may be two evenly positioned rods; however, the forces applied by stators 16a-16b may be the maximum force capable of being produced by stators 16a-16b, but in opposing directions. More simply, there may be force or load differences applied by stators 16a-16b that, because of plate 20 interconnecting rods 14a-14b, are restricted and difficult to detect. Both of the conditions are problematic, because they reduce component life. The incorporation of load cells 44a-44c allows this condition to be detected. Upon detection of a force imbalance by load cells 44a-44c, flight control computers 52a-52c can make adjustments to reduce imbalance or fighting. The result of using electromagnetic, non-binding, linear actuators, linear variable differential transformers, load cells, and a control system is an accurate, redundant, and efficient linear actuator in a compact housing. This makes linear actuator 10 a good solution for safety critical or mission critical applications.

Another major benefit of this system is true redundancy. With rotary motors having gear trains to convert rotational movement into linear movement, there are many potential points for a jam failure, making the redundancy difficult. This is not a problem with the present invention, because stators 16a-16c do not physically restrict the movement of rods 14a-14c. When, for example, stators 16a and 16c do not receive power, plate 20 may be driven by stator 16b and rod 14b. In this case, the movement of plate 20 will also result in the movement of the unpowered rods 14a and 14c. In effect, any of stators 16a-16c working alone can drive their rod to move plate 20. A benefit of this system is that the common surface being driven can be completely rigid. Because rods 14a-14c are capable of being driven in near perfect unison, the surface or object being driven does not need to account for inconsistencies in driving rods 14a-14c.

Although linear actuator 10 has been described as being a component of an aircraft system, linear actuator 10 may be applied anywhere a high accuracy, redundant, linear actuator is required, such as in the operation of rides at amusement parks, in industrial processes, or as actuators for valves.

Though load cells 44a-44c were described as being bi-directional, they may also sense force in a single direction. Further, other means of determining force, such as a strain gauge or torque sensor may be used in place of a load cell. Similarly, another sensor for detecting displacement could be used in place of linear variable differential transformers LVDTa-LVDTc. For example, an optical proximity sensor could be used. Further, additional sensors could be implemented to further increase the accuracy of linear actuator 10, such as additional position sensors, or different sensors entirely, such as acceleration sensors.

Although stators 16a-16c are shown as being arranged in a triangle, they may be arranged in any shape where the axes of motors Ma-Mc are parallel to each other. For example, they may be arranged in a straight line, which reduces the profile of actuator 10 in one direction. Motors Ma-Mc may also be arranged in configurations where their axes are not parallel, when required by the application.

### Discussion of Possible Embodiments

The following are non-exclusive descriptions of possible embodiments of the present invention.

A linear actuator includes an actuator housing. The actuator housing includes a plurality of motors providing linear movement along a motor drive axis wherein the motor drive axes are parallel, and wherein the motors are within the housing. Each motor includes a stator for applying an electromagnetic force and a rod movable within the stator. The electromagnetic force from the stator drives the rod to extend from and retract into the stator along the motor drive axis of that motor.

The linear actuator of the preceding paragraph can optionally include, additionally and/or alternatively, any one or more of the following features, configurations and/or additional components.

The linear actuator can further include a plurality of displacement sensors, wherein each displacement sensor can be associated with a different one of the rods, and wherein each displacement sensor can produce a displacement signal that can be a function of a position of its associated rod relative to the actuator housing.

The displacement sensors can be variable differential transformers.

The linear actuator can include a plurality of controllers, where each controller can be associated with a different one of the motors, a different one of the rods, and a different one of the displacement sensors, wherein each controller can provide a drive signal to its associated motor as a function of the displacement signal from its associated displacement sensor and a command signal.

The controllers can be connected to communicate between each other to synchronize movement of their associated rods.

The linear actuator can include a plurality of force sensors, wherein each force sensor can be associated with a different one of the stators, and wherein each force sensor can produce a force signal that is a function of the electromagnetic force applied by its associated stator.

The force sensors can be bi-directional load cells.

The bi-directional load cells can be disposed between an end of the actuator housing and its associated stator.

The linear actuator can include a plurality of controllers, where each controller can be associated with a different one of the motors, a different one of the rods, and a different one of the force sensors, wherein each controller can provide a drive signal to its associated motor as a function of the force signal from its associated force sensor and a command signal.

The plurality of controllers can be connected to communicate between each other to synchronize movement of their associated rods.

The linear actuator can include a plurality of displacement sensors, wherein each displacement sensor can be associated with a different one of the rods, and wherein each displacement sensor can produce a displacement signal that is a function of a position of its associated rod relative to the actuator housing.

The linear actuator can include a plurality of controllers, where each controller can be associated with a different one of the motors, a different one of the rods, a different one of the stator, a different one of the force sensors, and a different one of the displacement sensors, wherein each controller can provide a drive signal to its associated motor as a function of its force signal from its associated force sensor, its displacement signal from its associated displacement sensor, and a command signal.

The plurality of controllers can be connected to communicate between each other to synchronize movement of their associated rods

A method (for driving a linear actuator having a plurality of motors arranged within a common housing so that motor drive axes of the motors are parallel) includes receiving a command signal for each motor. The method also includes using a plurality of controllers, where each controller is associated with a different one of the motors, to produce a drive signal to be sent to the associated motor of each controller based on the command signal for that motor. The method also includes sending the drive signal to a stator of each motor from its associated controller. The method further includes driving a rod of each motor along one of the motor drive axis of that motor based on electromagnetic force produced by the stator in response to the drive signal.

The method of the preceding paragraph can optionally include, additionally and/or alternatively, any one or more of the following features, configurations and/or additional components or steps.

The method can include receiving a displacement signal that can be a function of position of each rod relative to the linear actuator. The method can also include receiving a load signal that can be a function of the electromagnetic force applied to each rod by its stator, and producing the drive signal that can be based on the command signal, the displacement signal, and the load signal.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A linear actuator (10) comprising:
an actuator housing (12);
a plurality of motors (Ma,Mb,Mc) providing linear movement along a motor drive axis wherein the motor drive axes are parallel, and wherein the motors (Ma,Mb,Mc) are within the housing (12), each motor comprises:
a stator (16a,16b,16c) for applying an electromagnetic force; and
a rod (14a,14b,14c) movable within the stator (16a,16b,16c), wherein the electromagnetic force from the stator (16a,16b,16c) drives the rod (14a,14b,14c) to extend from and retract into the stator (16a,16b,16c) along the motor drive axis of that motor (Ma,Mb,Mc).

2. The linear actuator of claim 1 and further comprising a plurality of displacement sensors (LVDTa,LVDTb,LVDTc), wherein each displacement sensor (LVDTa,LVDTb,LVDTc) is associated with a different one of the rods (14a,14b,14c), and wherein each displacement sensor (LVDTa,LVDTb,LVDTc) produces a displacement signal that is a function of a position of its associated rod (14a,14b,14c) relative to the actuator housing (12).

3. The linear actuator of claim 2, wherein the displacement sensors (LVDTa,LVDTb,LVDTc) are variable differential transformers.

4. The linear actuator of claim 2 or 3 and further comprising a plurality of controllers (110a,110b), each controller associated with a different one of the motors (Ma,Mb,Mc), a different one of the rods (14a,14b,14c), and a different one of the displacement sensors (LVDTa,LVDTb,LVDTc), wherein each controller provides a drive signal to its associated motor (Ma,Mb,Mc) as a function of the displacement signal from its associated displacement sensor (LVDTa,LVDTb,LVDTc) and a command signal.

5. The linear actuator of claim 4, wherein the controllers (110a,110b) are connected to communicate between each other to synchronize movement of their associated rods (14a,14b,14c).

6. The linear actuator of claim 1 and further comprising a plurality of force sensors (44a,44b,44c), wherein each force sensor (44a,44b,44c) is associated with a different one of the stators (16a,16b,16c), and wherein each force sensor (44a,44b,44c) produces a force signal that is a function of the electromagnetic force applied by its associated stator (16a,16b,16c).

7. The linear actuator of claim 6, wherein the force sensors (44a,44b,44c) are bidirectional load cells.

8. The linear actuator of claim 7, wherein each of the bi-directional load cells (44a,44b,44c) are disposed between an end of the actuator housing (12) and its associated stator (16a,16b,16c).

9. The linear actuator of claim 6, 7 or 8, and further comprising a plurality of controllers (110a,110b), each controller (110a,110b) associated with a different one of the motors (Ma,Mb,Mc), a different one of the rods (14a,14b,14c), and a different one of the force sensors (44a,44b,44c), wherein each controller (110a,110b) provides a drive signal to its associated motor (Ma,Mb,Mc) as a function of the force signal from its associated force sensor (44a,44b,44c) and a command signal.

10. The linear actuator of claim 9, wherein the plurality of controllers (110a,110b) are connected to communicate between each other to synchronize movement of their associated rods (14a,14b,14c).

11. The linear actuator of any of claims 6 to 8, and further comprising a plurality of displacement sensors (LVDTa,LVDTb,LVDTc), wherein each displacement sensor (LVDTa,LVDTb,LVDTc) is associated with a different one of the rods (14a,14b,14c), and wherein each displacement sensor (LVDTa,LVDTb,LVDTc) produces a displacement signal that is a function of a position of its associated rod (14a,14b,14c) relative to the actuator housing (12).

12. The linear actuator of claim 11 and further comprising a plurality of controllers (110a,110b), each controller (110a,110b) associated with a different one of the motors (Ma,Mb,Mc), a different one of the rods (14a,14b,14c), a different one of the stators (16a,16b,16c), a different one of the force sensors (44a,44b,44c), and a different one of the displacement sensors (LVDTa,LVDTb,LVDTc), wherein each controller (110a,110b) provides a drive signal to its associated motor (Ma,Mb,Mc) as a function of its force signal from its associated force sensor (44a,44b,44c), its displacement signal from its associated displacement sensor (LVDTa,LVDTb,LVDTc), and a command signal.

13. The linear actuator of claim 12, wherein the plurality of controllers (110a,110b) are connected to communicate between each other to synchronize movement of their associated rods (14a,14b,14c).

14. A method for driving a linear actuator (10) having a plurality of motors (Ma,Mb,Mc) arranged within a common housing (12) so that motor drive axes of the motors (Ma,Mb,Mc) are parallel, the method comprising:
receiving a command signal for each motor (Ma,Mb,Mc);
using a plurality of controllers (110a,110b), each controller (110a, 110b) associated with a different one of the motors (Ma,Mb,Mc), to produce a drive signal to be sent to the associated motor (Ma,Mb,Mc) of each controller based on the command signal for that motor (Ma,Mb,Mc);
sending the drive signal to a stator (16a,16b,16c) of each motor (Ma,Mb,Mc) from its associated controller (110a,110b); and
driving a rod (14a,14b,14c) of each motor (Ma,Mb,Mc) along one of the motor drive axis of that motor (Ma,Mb,Mc) based on electromagnetic force produced by the stator (16a,16b,16c) in response to the drive signal.

15. The method of claim 14, further comprising:
receiving a displacement signal that is a function of position of each rod (14a,14b,14c) relative to the linear actuator (10);
receiving a load signal that is a function of the electromagnetic force applied to each rod (14a,14b,14c) by its stator (16a,16b,16c); and
producing the drive signal based on the command signal, the displacement signal, and the load signal.
